# EUROPEAN PATENT SPECIFICATION

(11) **EP 1 831 434 B1**
(45) Date of publication and mention of the grant of the patent: **23.07.2008**
(21) Application number: 04816689.6
(22) Date of filing: 31.12.2004
(51) Int. Cl.: C25D 13/04, H01M 4/73, H01M 4/14

(54) **GRID FOR LEAD-ACID BATTERY WITH ELECTROCONDUCTIVE POLYMER COATING**
GITTER FÜR BLEIBATTERIE MIT ÜBERZUG AUS ELEKTRISCH LEITFÄHIGEM POLYMER
GRILLE POUR BATTERIE AU PLOMB-ACIDE AVEC REVETEMENT DE POLYMERE ELECTROCONDUCTEUR

(43) Date of publication of application: 12.09.2007
(73) Proprietor: COUNCIL OF SCIENTIFIC AND INDUSTRIAL RESEARCH, New Delhi 110 001 (IN)
(72) Inventor: SHUKLA, Ashok, Kumar, Karaikudi, Tamil Nadu (IN); MARTHA, Surendra, Kumar, Nahagra District, Orissa- 752083 (IN); HARIPRAKASH, Bellie, The Nilgiris, Tami Nadu 643 003 (IN); GAFFOOR, Shaik, Abdul, G-5, Kamakshi Residency, Balanagar, Hyderabad 500037 (IN); Dr Dinesh Chandra Trivedi, Jodhpu-342011 (IN)
(74) Representative: Gill, David Alan
(86) International application number: PCT/IN2004/000444
(87) International publication number: WO 2006/070405

(56) References cited:
- EP-A- 1 227 135
- EP-A- 1 261 049
- DE-A1- 19 806 360
- US-A- 5 961 810

## Description

### Field of the Invention

The present invention relates to lead-acid batteries. More specifically, the present invention relates to a method for reducing the weight of lead-acid batteries, and a process for producing the same, thereby increasing their specific energy.

### Related Art

A battery is a device which stores electrical energy such that the energy is available at desired times on demand. Batteries typically comprise two electrodes, i.e. an anode (negative plate) and a cathode (positive plate) placed in an electrolyte. Electrical energy is generally obtained from a battery as and when desired by connecting the electrical appliance to be operated across its negative and positive plates, as is well known in the relevant art.

Lead-acid batteries are in widespread use in 'automobiles, boats, aeroplanes, and for uninterrupted power supply units. In a conventional design, the negative and positive plates/grids of lead-acid batteries are implemented using lead alloys having lead in abundant proportions (including pure lead). In these electrodes, a primary role of lead/lead alloy is to facilitate electrical conduction during battery charging and discharging.

Although lead alloys are not generally as good electrical conductors as metals such as copper, they are often preferred over other metals due to the stability they provide during battery charging and discharging, and their relatively low cost. Specifically, lead/lead alloys are typically able to withstand appreciably the highly corrosive environment created by the acid electrolyte. Metals more conductive than lead either quickly corrode in acids (e.g., aluminum, copper) or are too expensive to be commercially viable (e.g., platinum).

In lead-acid batteries, the framework of a battery plate that supports the active material and also serves as the current collector is referred to as the "grid". Pasted grids are generally referred to as plates. By definition, the electrode is an electronic conductor, which acts as a source or a sink of electrons involved in electrochemical reactions taking place in such a battery.

While plates/grids made of lead/lead alloys are reasonably stable in acidic environment of a lead-acid battery, they are nevertheless corroded during the normal operation of the battery, limiting the lifetime of such a battery. It is thus desirable to provide protection against such corrosion, so as to enhance the durability of lead-acid batteries.

Additionally, due to the high mass-density of lead (11.3 g/cm³), lead-acid batteries are usually heavy. It is often desirable that batteries store high energy, but weigh less. Accordingly, a metric referred to as specific energy, which is measured by the number of watt hours (Wh) of energy stored in a battery per kilogram weight (kg) of the battery (abbreviated as Wh/kg), is often used to measure the efficacy or desirability of a battery. Thus, it is generally desirous to provide batteries with high specific energy.

For example, electric vehicles (EVs) for neighborhood applications, such as hospitals, industrial parks, holiday resorts, residential communities, and city centers, require batteries with high specific energy. Otherwise, the traction of the heavy batteries would in itself consume a sizeable fraction of the stored energy of the batteries. It is estimated that, for such applications, batteries with specific energy of 40-50 Wh/kg would be more appropriate. By contrast, many lead-acid batteries currently available in the market have energy density of about 30 Wh/kg. Batteries with high specific energy are generally important also in portable power applications, e.g. airborne systems, in which the weight of each component/sub-system is typically at a premium. Lead-acid batteries with high specific energy would also be advantageous in conventional automobiles with internal combustion engines, where fuel efficiency would be enhanced when batteries are lighter, as well as in hybrid EVs.

In attempting to achieve a significant reduction in the total weight of a lead-acid battery, an effective approach would be to reduce the weight of the plates/grids constituting the electrodes of the battery. This may be accomplished by replacing the electrode structure made entirely of lead/lead alloy with a structure that uses a lightweight material, which merely acts as a physical support (substrate), and is covered by a relatively thin copper and lead alloy flash layer (or laminate) that performs the charge/discharge functions of the battery. The use of such a composite structure for the battery plate/grid, instead of a relatively thick plate made entirely of lead alloy, can result in a significant reduction in the total weight of each plate/grid. A corresponding increase in the specific energy of the lead-acid battery then ensues. However, the use of a relatively thin layer of lead increases the need for its protection against corrosion in the strong acid environment of the lead-acid battery. Some prior art approaches are briefly described below.

US Patent 4,221,854, titled, "Lightweight laminated grid for lead-acid storage batteries", issued to Hammar *et al.* (hereafter Hammar) describes a lead-acid battery in which a grid/plate comprises a substrate made of a polymer (such as polyvinychloride) laminated with a thin lead/lead alloy foil. This combination reduces the weight of the battery plate/grid, contributing to an increase in the specific energy of the battery. However, Hammar does not appear to describe a corrosion resistant coating (and/or a process for forming the same on the substrate). As a result, the plate/grids of Hammar may be subsceptible to corrosion in acid electrolytes, thereby limiting the durability of the corresponding batteries.

US Patent 4,713,306, titled, "Battery Element and Battery Incorporating Doped Tin Oxide Coated Substrate" issued to Pinsky *et al* (hereafter "Pinsky") describes a battery element useful as at least a portion (which appears to mean the grid) of the positive plate coated with electrically conductive doped tin oxide. The tin oxide coating does not appear to be meant to provide protection to the grid against acid corrosion since the grid made of glass fibre is inherently resistant to acid corrosion.

US Patent 5,643,696, titled, "Battery plates with lightweight cores" issued to Rowlette describes battery plates/grids made of metallic substrates (aluminum or titanium or their alloys) coated with lead/lead alloy. These metallic substrates may still have unacceptably high mass density (e.g. Aluminum has an approximate mass density, of 2.7 grams cm⁻³). Accordingly, it may be desirable to produce batteries using substrates made of materials having an even lower mass density.

Another approach is described in US Patent 6,232,017, titled "Grid for lead-acid battery", issued to Tsuchida *et al* (hereafter "Tsuchida"), in which polyamide and glass fibers are used to construct a composite battery plate/grid. The weight of the grid is reduced, in comparison with conventional grids made entirely of lead/lead alloys, by using the low density of polyamide to form a support structure, and a glass fiber sheet coated by a thin layer of lead/alloy to form the electricity-collecting part of the battery plate/grid. However, a corrosion resistant coating of the plates/grids appears to be absent in Tsuchida, just as it is absent in Hammar, thereby making the embodiments susceptible to acid corrosion.

In US Patent 6,316,148, titled, "Foil-encapsulated, lightweight, high energy electrodes for lead-acid batteries", Timmons *et al* (hereafter Timmons) describe another approach to reduce the weight of lead-acid batteries. The electrodes are made of non-lead substrates (such as aluminum) encapsulated by thin sheets of conductive foils of lead/lead alloy, that conduct electricity. The foils, being corrosion-resistant, protect the substrate from acid corrosion. The weight of the battery is reduced by the use of non-lead substrates with mass density no greater than 70% of the mass density of lead. However, Timmons also appears to suffer from the same inadequacies of Hammar and Tsuchida in that a corrosion-resistant coating of the plate/grid appears to be absent.

In addition to providing high specific energy, it is desirable to produce batteries meeting several other requirements. For example, it is desirable to use cost-effective material for the substrates to reduce the overall cost of producing batteries. The overall manufacturing technology further needs to allow thin coatings of lead alloy on such a cost-effective and lightweight substrate material. The technology further needs to allow corrosion resistant coatings to be applied to the plates/grids, in order to enhance the durability of the resulting lead-acid batteries.

One problem with the use of a low cost material, which also has a low mass density, as the substrate is that the melting point of such a material may be low, making it incompatible with several technologies employed in manufacture of lead-acid batteries. Similar incompatibility may also exist when applying a corrosion resistant coating with sufficiently good electrical conductivity on the lead alloy layer.

For example, the formation of such a corrosion-resistant coating, such as that of tin oxide, on the lead/lead alloy layer of the battery plate/grid usually requires a temperature significantly higher than 327°C, the melting point of lead. In particular, the formation of a tin oxide layer by the simple and convenient "dip coating" method requires calcination at a temperature in the range 450-600°C ("Development of positive electrodes with SnO2 coating by applying a sputtering technique for lead-acid batteries", by Kurisawa et al. Journal of Power Sources 95 (2001) pp. 125 -129, hereafter "Kurisawa").

### Objective of the invention:

The main objective of the present invention is to provide a corrosion resistant grid structure used in a lead-acid battery, said grid structure.

### Summary of the invention

Accordingly, the present invention provides an electrochemical method for manufacture of a corrosion resistant grid structure for use in a lead-acid battery, the method comprising:
(a) coating a substrate material with a first metal layer and a subsequent metal layer of lead/lead alloy;
(b) electrodepositing an organic metal on the layer obtained at the end of step (a) using an electrolyte to form a protective layer thereon and to obtain the desired grid structure. In one embodiment of the invention, the first metal layer is a layer of copper or nickel. In another embodiment of the invention, the electrolyte used in step (b) is oxalic acid.

In another embodiment of the invention, the organic metal comprises polyaniline and like organic metals.

In another embodiment of the invention, the substrate layer is plastic.

In another embodiment of the invention, the plastic is acrylonitrile butadiene styrene.

In a further embodiment of the invention, the electrochemical coating process is performed a plurality of times to obtain a protective layer of desired thickness.

In another embodiment of the invention, the lead/lead alloy layer is deposited of the grid structure is deposited by potentiostatic deposition of polyaniline from about 0.1N polyaniline solution in oxalic acid by placing the said grid between two auxiliary platinum foil electrodes.

The present invention also provides a corrosion resistant grid structure for use in a lead-acid battery, the grid structure comprising:
(a) a substrate material coated with a first metal layer,
(b) a second metal layer of lead/lead alloy layer deposited on the first metal layer, and
(c) an organic metal layer electrodeposited on the lead/lead alloy layer.

In one embodiment of the invention, the substrate material is a plastic.

In another embodiment of the invention, the plastic is acrylonitrile butadiene styrene.

In yet another embodiment of the invention, the first metal layer is a layer of copper or nickel.

In another embodiment of the invention, the organic metal is selected from polyaniline or like organic metals, deposited on the lead/lead alloy layer by electrodeposition using an electrolyte comprising oxalic acid.

In another embodiment of the invention, the first metal layer supports adhesion of the lead/lead alloy layer.

In another embodiment of the invention, the substrate has a mass density of less than 2.5 grams/cm³ and a melting point of less than 300°C.

In another embodiment of the invention, the substrate has a low mass density of less than about 1.5 g/cm³ and a low melting point of less than about 175°C.

In another embodiment of the invention, the first metal layer has a thickness of not more than 10 micrometers, the lead/lead alloy layer has a thickness of not more than 100 micrometers, and the protective layer has a thickness of not more than 15 micrometers.

The present invention also provides a battery comprising:
(a) a positive plate; and
(b) a negative plate containing a grid structure, the grid structure comprising:
   (i) a substrate;
   (ii) a first metal layer deposited on the substrate;
   (iii) a second metal layer comprising a lead/lead alloy layer deposited on the first metal layer; and
   (iv) an electrically conductive and corrosion-resistant organic metal layer deposited on the lead/lead alloy layer.

In one embodiment of the invention, the substrate is a plastic.

In another embodiment of the invention, the substrate has a low mass density of less than about 1.5 g/cm³ and a low melting point of less than about 175°C.

In another embodiment of the invention, the plastic is acrylonitrile butadiene styrene having a mass density of less than 2.5 grams/cm³, and a melting point lower than 300°C.

In another embodiment of the invention, the first metal layer is a layer of copper or nickel.

In another embodiment of the invention, the first metal layer supports adhesion of the lead/lead alloy layer.

In yet another embodiment of the invention, the organic metal is electrically conductive and corrosion resistant and is selected from polyaniline or like organic metals to form a corrosion protective layer for the lead/lead alloy layer.

In yet another embodiment of the invention, the battery further comprises a container a container for holding the negative plate and the positive plate and an electrolyte provided within the container.

In another embodiment of the invention, the electrolyte is sulphuric acid.

In another embodiment of the invention, the first metal layer has a thickness of not more than 10 micrometers, the lead/lead alloy layer has a thickness of not more than 100 micrometers, and the organic metal layer has a thickness of not more than 15 micrometers.

In another embodiment of the invention, the anode comprises the substrate, first metal layer, lead/lead alloy layer and the organic metal layer.

In another embodiment of the invention, the faradaic efficiency of the battery is 90%.

In another embodiment of the invention, the battery experiences 38% increase in capacity at low discharge rate of C/20 and 50% of capacity at high discharge rate of 3C in relation to its capacity at C/5 rate.

In another embodiment of the invention, the battery exhibits 25% increase in capacity at 50°C in relation to its capacity at 25°C and at temperatures below 25°C, decrease with 38% capacity in comparison to the capacity value observed at 25°C.

In another embodiment of the invention, the battery accepts 90% of charge within 1.5 hours of charge during high rate charging.

In another embodiment of the invention, the self-discharge of the battery is found to be 0.3%/Day.

In another embodiment of the invention, the capacity loss is minimal during 100 cycles.

### Brief description of the accompanying drawings

The present invention will be described with reference to the accompanying drawings, wherein:
Figures (Fig.) 1A and 1B are diagrams illustrating the details of grid/plate structure in an embodiment of the present invention;
Figure 2 is a flowchart illustrating the method of fabricating the grids according to an aspect of the present invention;
Figure 3 is an example model illustrating the details of lead-acid batteries in an embodiment of the present invention;
Figure 4 is the charge /discharge plot of a lead-acid battery in an embodiment of the present invention;
Figure 5 is the discharge capacity data for the lead-acid batteries obtained at 25°C at (i) C/20, (ii) C/15, (iii) C/10, (iv) C/5, (v) C/3, (vi)C/2, and (vii) C, (viii) 2C, and (ix) 3C rates in an embodiment of the present invention;
Figure 6 is the discharge capacity data for the lead-acid batteries obtained at C/5 rate at (i) - 20°C, (ii) 0°C, (iii) 25°C, and (iv) 50°C in an embodiment of the present invention.
Figure 7 is the high rate charging data for the lead-acid batteries obtained at 25°C at (i) 2C, (ii) C, (iii) C/2, (iv) C/3, (v) C/5, (vi) C/10, and (vii) C /20, and (viii) constant potential charging in an embodiment of the present invention.
Figure 8 is the high rate charging data for the lead-acid batteries after 5 days of storage in discharge condition obtained at 25°C at (i) 2C, (ii) C, (iii) C/2, (iv) C/3, (v) C/5, (vi) C/10, and (vii) C /20, and (viii) constant potential charging in an embodiment of the present invention;
Figure 9 is the discharge data obtained at 25°C at C/5 rate for the lead-acid batteries of the present invention after charging as per schedule shown in Fig. 8; (a) before storage, and (b) after storage for 5 days in discharge state; and
Figure 10 is the cycle-life data for the lead-acid batteries after 100 cycles at 25°C in an embodiment of the present invention.

### Detailed description of the invention

The present invention provides an electrochemical method of manufacturing a corrosion resistant grid structure used in a lead-acid battery. The method essentially comprises coating a substrate material with a metal layer of copper or nickel and a subsequent layer of lead/lead alloy followed by electrodeposition of an organic metal over the lead/lead alloy layer using an electrolyte such as oxalic acid.

The substrate used is a polymer, preferably a plastic with a low mass density of less than about 1.5 grams cm⁻³ and low melting point of less than about 175°C. For example, an ideal substrate material is acrylonitrile butadiene styrene. The first metal layer is not more than 10 micrometers in thickness, the lead/lead alloy layer is not more than 100 micrometers in thickness, and the protective layer is not more than 15 micrometers in thickness. The metal layer used supports the adhesion of lead/lead alloy layer.

The battery obtained in the invention comprises:
a positive plate; and
a negative plate containing a grid structure, the grid structure comprising:
   a substrate made from acrylonitrile butadiene styrene having a mass density of less than 2.5 grams cm³, and a melting point lower than 300 degrees Celcius;
   a metal layer of copper or nickel deposited on the substrate;
   a lead/lead alloy layer deposited on the metal layer, wherein the metal layer supports adhesion of the lead/lead alloy layer; and
   an electrically conductive and corrosion-resistant polyaniline layer providing corrosion protection for the lead/lead alloy layer.

The battery further comprises a container for holding the negative plate and the positive plate, with an electrolyte such as sulphuric acid also located within said container. The anode also comprises the substrate, first metal layer, the lead alloy layer and the organic metal layer.

It has been observed that the faradaic efficiency of the battery is 90%. The battery experiences 38% increase in capacity at low discharge rate of C/20 and 50% of capacity at high discharge rate of 3C in relation to its capacity at C/5 rate. The battery also exhibits 25% increase in its capacity at 50°C in relation to its capacity at 25°C. At temperatures below 25°C, the capacity values of the battery were found to decrease with 38% capacity in comparison to the capacity value observed at 25°C. The battery accepts 90% of charge within 1.5 hours of charge in high rate charging. The self-discharge of the battery is found to be 0.3%/Day. The capacity loss is minimal during 100 cycles.

The lead/lead alloy of a grid for the battery is deposited by potentiostatic deposition of polyaniline from about 0.1N polyaniline solution in oxalic acid, by placing the said grid in between two auxiliary platinum foil electrodes. Other similar organic metals which show properties such as those of corrosion resistance and conductivity can also be used instead of polyaniline. The electrochemical coating process is performed a plurality of times to achieve a protective layer of a desired thickness.

The abstract of Kurisawa states that, "... it is impossible to apply this (dip coating) method to a Pb (lead) substrate...", thereby implying that calcination temperature required to form a protective tin oxide layer in such method is incompatible with the lead/lead alloy plate/grid. Attempts have therefore been made by Kurisawa to use coating technologies that employ low temperatures. For example, Kurisawa describes using vacuum-based thin film technology to form protective SnO₂ coatings on lead grids. In such a coating process, the temperature of the lead grid to be coated does not exceed approximately 120°C. Specifically, Kurisawa teaches using the radio frequency (RF) sputtering technique to deposit a 15 micrometer-thick SnO₂ coating onto a 500 micrometer-thick lead plate. Such a protective coating of SnO₂, on the relatively thin lead plate/grid, has been shown in Kurisawa to be effective in reducing positive plate/grid corrosion in lead-acid batteries and in improving the specific energy of the batteries thereby.

However, sputtering is generally a slow process (e.g., Kurisawa indicates a rate of 0.4 micrometer/hour), which may require that the substrate (along with the lead alloy coating) be subjected to ambient temperatures (e.g., 120°C in Kurisawa) for many hours. The prolonged exposure to such ambient temperatures may compromise the mechanical integrity of the plates/grids having low melting points, even if the ambient temperatures are lower than the melting point of the materials forming the substrate and the coatings.

Furthermore, as sputtering is generally a line-of-sight deposition process, both sides of an electrode (plate/grid) cannot be coated in a single step, unless complex and expensive sputtering apparatus is employed. The cost of forming a corrosion-resistant coating on a battery plate/grid by such a sputtering process is likely to be high, which may not be acceptable in several applications. It is noteworthy that SnO₂ is unstable in H₂SO₄ below 0.5V vs. Pb/PbSO₄.

Therefore, what is desirous is a process, which allows the corrosion-resistant coating to be formed on battery plates/grids constructed from a lightweight, inexpensive material, usually having a low melting point. Such plates/grids may then be used to fabricate lead-acid batteries, which would have a higher specific energy and a longer lifetime than the conventional lead-acid batteries.

An embodiment of a grid structure (used in a lead-acid battery) may contain a substrate made from a material having a mass density of less than 2.5 g/cm³, and a melting point lower than 300°C. A metal layer may be deposited on the substrate. A lead/lead alloy layer may be deposited on the metal layer, wherein the metal layer supports adhesion of said lead/lead alloy layer. An electrically conductive and corrosion-resistant layer provides corrosion protection for the lead/lead alloy layer. Due to the low mass density of the substrate, a high specific energy could be obtained.

The substrate is made of plastic, a polymer. The embodiment may be implemented with the metal layer being not more than 10 micrometers in thickness, the lead/lead alloy layer being not more than 100 micrometers in thickness, and the protective layer being not more than 15 micrometers in thickness. The electrically conductive and corrosion-resistant layer may contain polyaniline or a similar organic metal.

A method according to another aspect of the present invention enables a grid structure to be manufactured. The method may include coating a substrate with a metal compound, wherein the substrate is previously coated with a metal layer and a lead/lead alloy layer. The substrate is then subjected to electrochemical deposition of a polyaniline or similar organic metal film to form an electrically conducting and corrosion-resistant organic metal layer on the lead/lead alloy layer. The electrodeposition of polyaniline on oxidized metal surfaces like lead is a ticklish problem because of two competing anodic reactions, viz. the formation of metal oxide and oxidative polymerization of aniline monomer within the vicinity of anode.

The novelty of the present invention lies in the use of a reducing acid like oxalic acid as an electrolyte for anodic deposition of polyaniline over lead/lead alloy layer to prevent the formation of the oxide layer on the lead/lead alloy surface due to its reducing action. It is noteworthy that the approach described under this invention is entirely different from the approach described by Chen and Kwok under US Patent 6,617,071 B2 and its European equivalent EP 126,049 A1 where the claims are made for a high power lead-acid plate covered with a conducting polymer matrix of preferably polyaniline and its derivatives, which is then coated with nano-size particles of active material such as lead sulfate and a basic lead sulfate complex.

The novelty of the invention lies in an electrochemical process for deposition of polyaniline on lead/lead alloy under given conditions in the absence of which lead is oxidized to lead dioxide hindering the deposition of polyaniline on lead/lead alloy.

Additional features of the invention are described in detail below with reference to the accompanying drawings.

### 1. Overview and Discussion of the Invention

A lead-acid battery according to an aspect of the present invention is implemented using a plate/grid structure containing four layers: substrate, metal layer, lead layer and a fourth layer, which is electrically conductive and corrosion-resistant. The substrate is formed with a material of low density, which acts as the base on which other layers are deposited. The metal layer (copper or nickel) is chosen to operate as a seed layer for the deposition of a layer of lead as the next layer and also to improve conductivity in addition to providing adhesive support for the lead layer in addition to improve conductivity. Lead layer comprising pure lead or alloys of lead provides the electrical path for charge/discharge of the battery. The fourth layer, which is electrically conducting, operates also as a protective layer against corrosion of the underlying lead/lead alloy layer.

Due to the use of a low-density material for the substrate, the weight of each plate/grid is reduced leading to a corresponding increase in the specific energy of the lead-acid battery. By choosing a low-melting point and low density material for the substrate, e.g., plastic polymer, cost can be reduced, which makes the battery cheaper. As the plates/grids are of low weight, the battery container, which encloses and supports them can also be made lighter, leading to further increase in the specific energy of the lead-acid battery.

Another aspect of the present invention allows such a structure to be manufactured potentially at low cost and in a short time. The structure with the first three layers (substrate, metal, and conductive layer) can be formed in a conventional manner. The fourth layer, an electrically conductive and corrosion resistant (e.g., polyaniline) layer, which protects the metal and lead/lead alloy layers against corrosion, is formed by applying a suitable organic metal (e.g., polyaniline) to the three layer structure. Polyaniline is potentiostatically deposited on lead-coated acrylonitrile butadiene styrene (ABS) grid from 0.1N solution of polyaniline in oxalic acid employing two platinum counter electrodes placed on either side of the lead-coated ABS grid by imposing an electrical potential of 1.5V across the grids, and the counter electrode. After deposition, the grids are washed copiously with deionized water and dried in a hot air oven at 60°C.

Several aspects of the invention are described below with reference to the figures for illustration. It should be understood that numerous specific details, relationships, and methods are set forth to provide a full understanding of the invention. One skilled in the relevant art, however, will readily recognize that the invention can be practiced without one or more of the specific details, or with other methods, etc. In other instances, the details of well-known structures or operations are not shown for the purpose of brevity and so as to avoid obscuring the invention.

### 2. Grid/Plate Structure

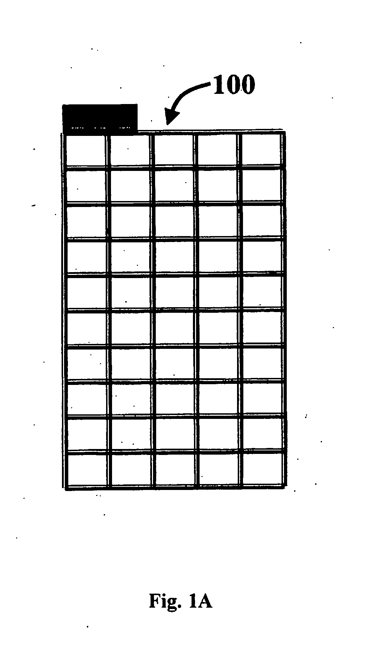

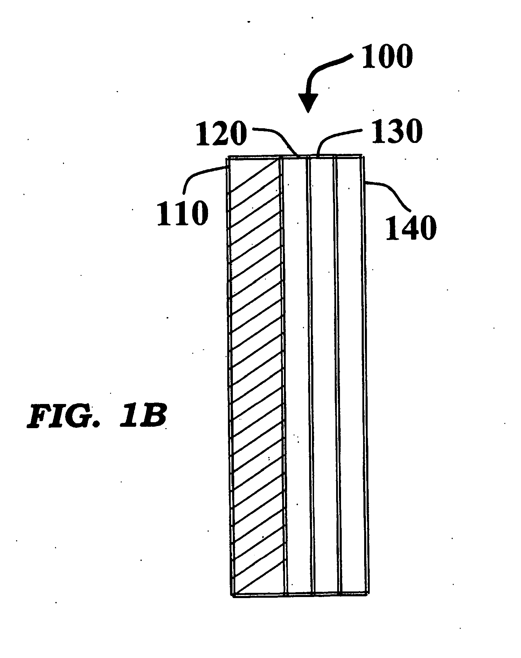

Figures 1A and 1B are diagrams illustrating the details of grid/plate structure 100 in an embodiment of the present invention. Figure 1A is a diagram illustrating the details of front view of plate/grid structure 100. Different layers forming the plate/grid with low mass density are described below with reference to Figure 1B. Grid/plate structure 100 is shown containing substrate 110, metal layer 120, lead layer 130 and protective, corrosion-resistant layer 140. Each layer is described below in further detail.

Substrate 110, formed from material with a low mass-density and a low melting point, constitutes the core of a plate/grid on which other layers are deposited. As noted above, the low mass-density and low melting point enable high specific energy lead-acid batteries to be implemented at a low cost. In an embodiment, substrate 110 is implemented using ABS polymer (plastic). Other types of polymers can be used for substrate 110. The generally flexible nature of plastics makes substrate 110 tolerant to mechanical stress. In addition, as polymer plastics such as ABS are not susceptible to corrosion even in concentrated sulfuric acid present in lead-acid batteries, substrate 110 is suitable to lead-acid batteries.

Metal layer 120 can be formed by a low cost metal such as copper or nickel, even though more expensive metals such as gold can also be used when applications so require. Metal layer 120 may be deposited so as to have the desired thickness (generally less than 10 micrometers). Metal layer 120 operates as a seed layer for the deposition of lead/lead alloy layer 130, while also providing adhesive support to it.

Lead/lead alloy layer 130 can be formed by a thin layer of lead or a lead alloy (e.g., lead-tin alloy) deposited onto metal layer 120. As lead is a high-density material, it is desirable to keep the lead (or lead alloy) layer appropriately thin to obtain a high specific energy in the resulting lead-acid battery. As is well known in the relevant art, lead/ lead alloy layers provide electrical conduction path for charge/discharge of the battery.

Protective layer 140 represents an example of an electrically conductive and corrosion-resistant layer (for example, polyaniline) electrochemically deposited onto lead/lead alloy layer to protect the plate/grid from chemical corrosion.

As noted in the background section above, the deposition of these protective layers presents a challenge if oxide layer(s) is (are) present in the underlying layers/substrate. The manner in which such concern is addressed is described below with reference to an example manufacturing process.

### 3. Manufacturing Process

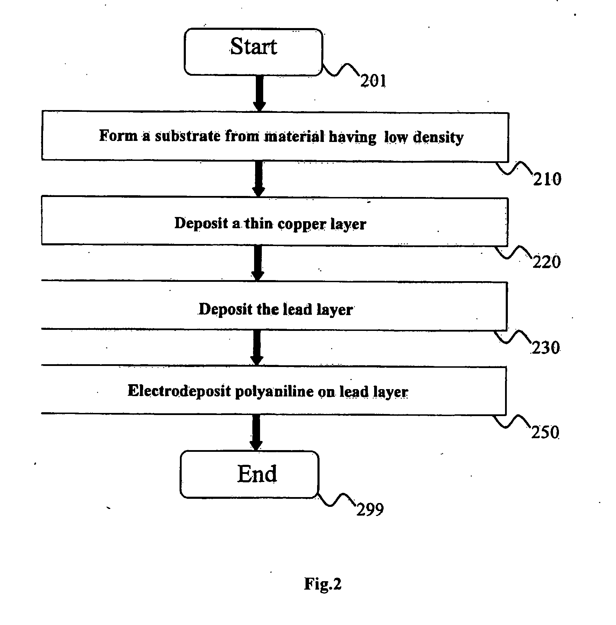

Figure 2 is a flowchart illustrating a process for fabricating plates/grids according to an aspect of the present invention. The method is described with reference to Figures 1A and 1B for illustration. However, the method can be implemented in several other embodiments as will be apparent to one skilled in the relevant arts based on the disclosure provided herein. The method begins in step 201 in which control passes to step 210.

In step 210, a substrate is formed from a material of low mass-density and low melting point. Several well-known methods can be used to form the substrate. For example, injection molding may be used to form substrate 110 from the ABS plastic. In the alternative, a stamping process may be used to form substrate 110 from a glass fiber-reinforced plastic.

In step 220, a thin metal layer is deposited onto substrate 110 to provide support for, and to enable the deposition of the next lead/lead alloy layer. For example, copper can be used to form this thin metal layer, as it is inexpensive. One of several well-known approaches can be used to form the copper layer on substrate. For illustration, electroless plating process can be used to deposit copper layer on substrate 110. The thin metal layer corresponding to metal layer 120 of Figure 1B ensures sufficient adhesion of the lead layer to the substrate.

In step 230, a thin lead/lead alloy layer is deposited on to the thin metal layer to form the generally required electrical conduction path of lead-acid batteries. The thin lead/lead alloy layer can be formed by an electroplating process. Steps 250 and 270 can be used to deposit a protective layer, which prevents corrosion of the underlying layers 120 and 130.

In step 250, a polyaniline layer is deposited electrochemically on the grid from, a 0.1N polyaniline solution in oxalic acid is used. Each grid is placed symmetrically between two auxiliary platinum electrodes.

The substrate resulting from step 250 is a film of polyaniline, which is corrosion resistant and electrically conducting. Rates of corrosion for the resultant grids were found to be only one fourth compared to conventional lead grids used in lead-acid batteries.

In general, step 250 may not be necessary for fabricating the negative plate/grid, as negative plate/grid of a lead-acid battery is less vulnerable to chemical corrosion. However, for ease of manufacturing process, fabrication of the negative grid may be identical to that of positive grid as illustrated above.

It may be appreciated that step 250 involves a simple process that can be carried out using inexpensive equipment. Step 250 enables the use of lightweight plastic substrate and a thin layer of lead layer 130 (of Figure 1B), resulting in a substantial reduction of the weight of plates/grids and thus the weight of lead-acid batteries. The method ends in step 299.

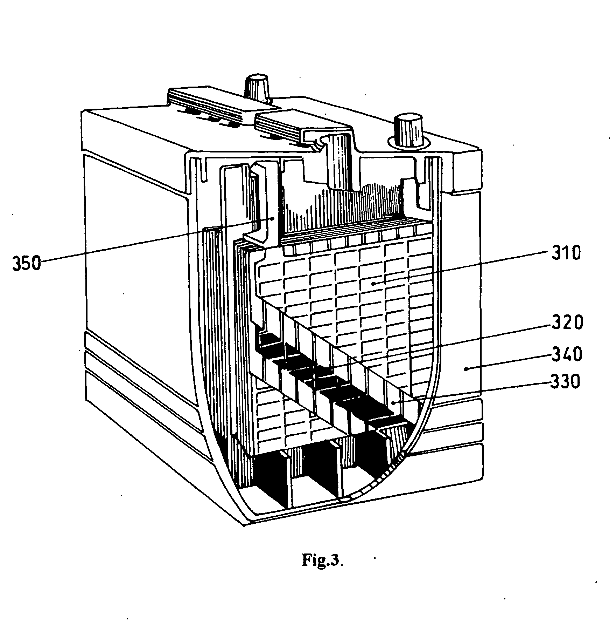

The manner in which lightweight plates/grids thus manufactured are assembled to provide a lead-acid battery is described below with reference to Figure 3.

### 4. Lead-Acid Battery

Figure 3 is a diagram illustrating the details of a lead-acid battery implemented according to an aspect of the present invention. Battery 300 is shown containing plates/grids 310 and 320, absorbent glass mat 330, lug 340 and container 350. Each component is described below.

Each of plates/grids 310 and 320 may contain multiple units of plate/grids formed as illustrated in Figure 2, depending on the amount of energy to be stored and delivered at a desired battery voltage. Plates 310 and 320 may be formed in a known way, for example, by applying lead oxide paste followed by curing. One of the two plates/grids 310 and 320 may be implemented as a negative plate and another as a positive plate, in a known way (based on units of plate/grid 100). Electrolyte and active paste may also be applied between a plurality of plates/grids 310 and 320 in a known way. The separator absorbent glass mat 330 separates plates/grids 310 and 320 from each other. Lug 340 connects the plate straps and may be implemented using light weight material because lug 340 needs only to support low weight plates/grids provided, using various aspects of the present invention.

Container 350 generally needs to be made with a strong, leak-proof, and corrosion resistant material. Container 350 may also be made of low mass density material to further reduce the weight of battery 300. Thus, various aspects of the present invention enable lead-acid batteries with high specific energy and long life to be provided at low cost.

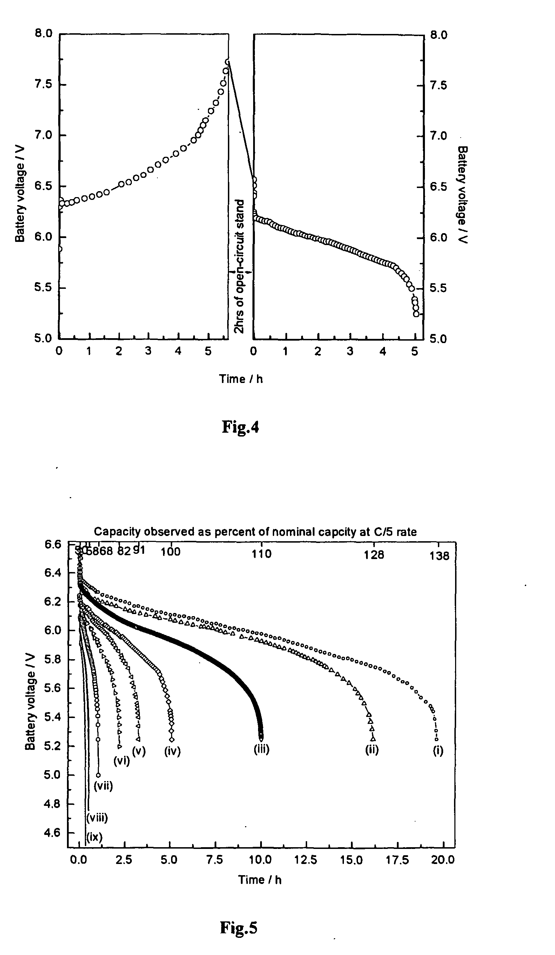

Fig.4. illustrates a typical galvanostatic charge-discharge data obtained at 25°C and at 5h-rate (C/5 rate) for a 6V/3.5Ah VRLA battery assembled with the light weight grids of the invention as described above. Data suggest a faradaic efficiency of 90% for the battery.

Performance characteristics of the battery at different rates ranging between C/20 and 3C rates are shown in Fig. 5. The battery exhibits an increase in capacity of 38% at low discharge rate of C/20 in relation to its capacity value observed at C/5 rate. At high discharge rates of 2C and 3C the observed capacities were 58% and 50% in relation to its capacity value observed at C/5 rate.

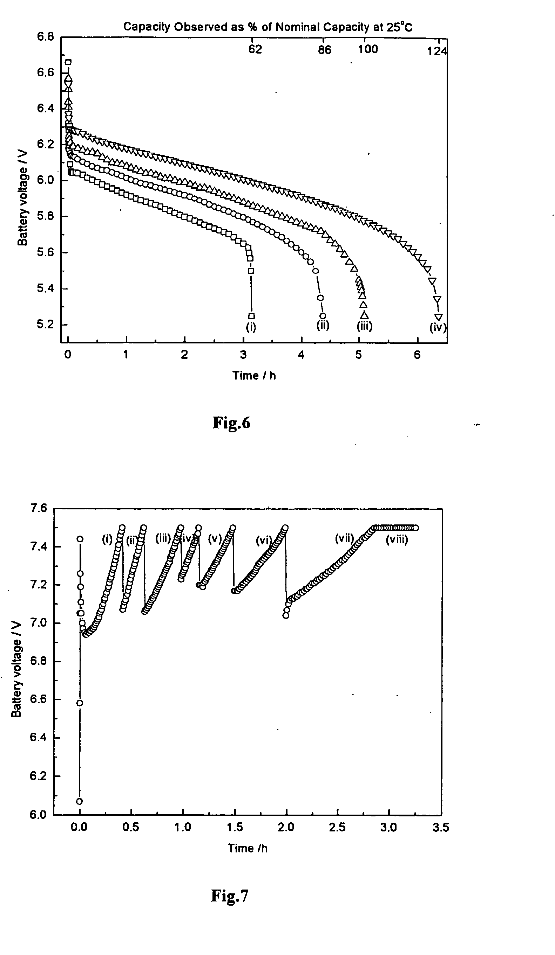

Fig.6. shows the discharge data at different temperatures between 50 and -20°C. The battery exhibited a 25% increase in its capacity at 50°C in relation to its capacity at 25°C. At temperatures below 25°C, the capacity values of the battery were found to be 38% lower in comparison to the capacity value observed at 25°C.

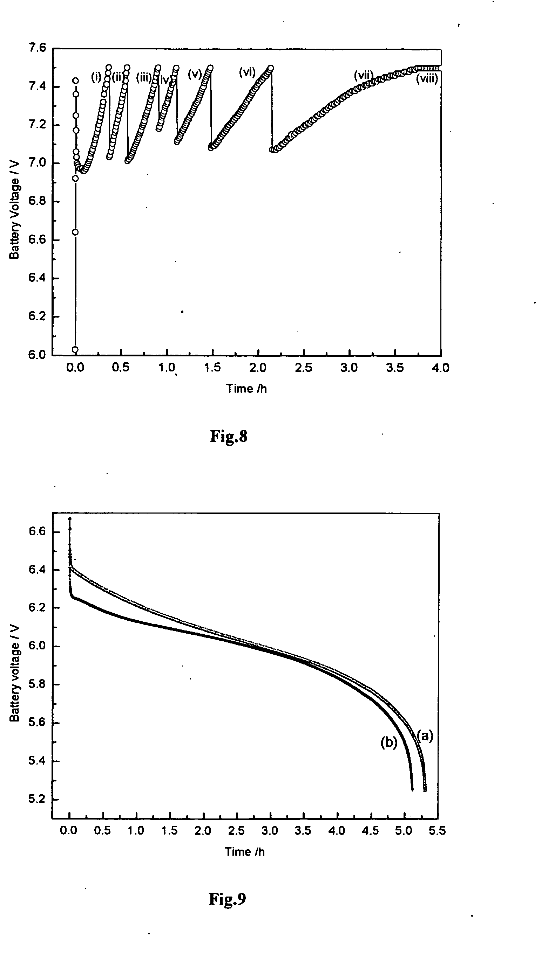

Fig.7. illustrates the high-rate charging data for a 6V/3.5Ah VRLA battery assembled with light weight grids of the present invention. The data suggest a charge acceptance of 90% within 1.5 hours of charge. It has been seen that the batteries accept 110% charge within 3.5 hours. It is noted that the capacity delivered by high rate charging is similar to conventional charging at constant voltage or constant current. The batteries were kept standing over a period of 5 days in discharge condition and were subsequently subjected to high rate charging and the data is shown in Fig. 8. The data show little change in the charge acceptance of the batteries for the charge rate between C/10 and 2C.

Fig. 9(i) shows the discharge data at C/5 rate for the batteries after charging as per the schedule in Fig. 8. The batteies are subsequently stored in discharged state for 5 days, were then charged as per schedule in Fig. 8., and subsequently discharged at C/5 rate (Fig. 9(b)). A comparison data in Figs. 9(a) and (b) shows little passivation.

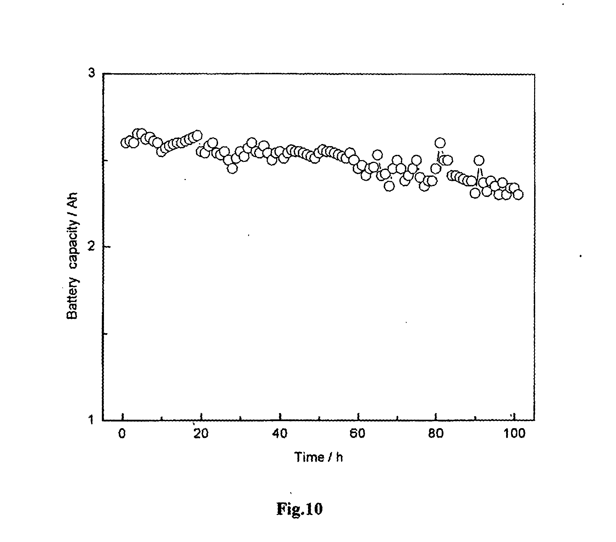

The cycle life data for the batteries shown in Fig. 10 indicates the capacity loss to be minimal during 100 charge/discharge cycles.

While various embodiments of the present invention have been described above, it should be understood that such embodiments are illustrative and not limiting.

## Claims

1. An electrochemical method for manufacture of a corrosion resistant grid structure for use in a lead-acid battery, the method comprising:
(a) coating a substrate material with a first metal layer and a subsequent metal layer of lead/lead alloy;
(b) electrodepositing an organic metal on the layer obtained at the end of step (a) using an electrolyte to form a protective layer thereon and to obtain the desired grid structure.

2. A method as claimed in claim 1 wherein the first metal layer is a layer of copper or nickel.

3. A method as claimed in claim 1 wherein the electrolyte used in step (b) is oxalic acid.

4. A method as claimed in claim 1 wherein the organic metal comprises polyaniline and like electrically conductive and corrosion resistant organic metals.

5. A method as claimed in claim 1 wherein the substrate layer is plastic.

6. A method as claimed in claim 5 wherein the plastic is acrylonitrile butadiene styrene.

7. A method as claimed in claim 1 wherein the electrochemical coating process is performed a plurality of times to obtain a protective layer of desired thickness.

8. A method as claimed in claim 4 wherein the polyaniline layer is deposited by potentiostatic deposition of polyaniline from about 0.1N polyaniline solution in oxalic acid by placing the grid between two auxiliary platinum foil electrodes.

9. A corrosion resistant grid structure for use in a lead-acid battery, the grid structure comprising:
(a) a substrate material coated with a first metal layer,
(b) a second metal layer of lead/lead alloy layer deposited on the first metal layer, and
(c) an organic metal layer electrodeposited on the lead/lead alloy layer.

10. A grid structure as claimed in claim 9 wherein the substrate material is a plastic.

11. A grid structure as claimed in claim 10 wherein the plastic is acrylonitrile butadiene styrene.

12. A grid structure as claimed in claim 9 wherein the first metal layer is a layer of copper or nickel.

13. A grid structure as claimed in claim 9 wherein the organic metal is selected from polyaniline or like electrically conductive and corrosion resistant organic metals, deposited on the lead/lead alloy layer by electrodeposition using an electrolyte comprising oxalic acid.

14. A grid structure as claimed in claim 9 wherein the first metal layer supports adhesion of the lead/lead alloy layer.

15. A grid structure as claimed in claim 9 wherein the substrate has a mass density of less than 2.5 grams/cm³ and a melting point of less than 300°C.

16. A grid structure as claimed in claim 9 wherein the substrate has a low mass density of less than about 1.5 g/cm³ and a low melting point of less than about 175°C.

17. A grid structure as claimed in claim 9 wherein the first metal layer has a thickness of not more than 10 micrometers, the lead/lead alloy layer has a thickness of not more than 100 micrometers, and the protective layer has a thickness of not more than 15 micrometers.

18. A battery comprising:
(a) a positive plate; and
(b) a negative plate containing a grid structure, the grid structure comprising:
(i) a substrate;
(ii) a first metal layer deposited on the substrate;
(iii) a second metal layer comprising a lead/lead alloy layer deposited on the first metal layer; and
(iv) an electrically conductive and corrosion-resistant organic metal layer deposited on the lead/lead alloy layer.

19. A battery as claimed in claim 18 wherein the substrate is a plastic.

20. A battery as claimed in claim 18 wherein the substrate has a low mass density of less than about 1.5 g/cm³ and a low melting point of less than about 175°C.

21. A battery as claimed in claim 19 wherein the plastic is acrylonitrile butadiene styrene having a mass density of less than 2.5 grams/cm³, and a melting point lower than 300°C.

22. A battery as claimed in claim 18 wherein the first metal layer is a layer of copper or nickel.

23. A battery as claimed in claim 18 wherein the first metal layer supports adhesion of the lead/lead alloy layer.

24. A battery as claimed in claim 18 wherein the organic metal is electrically conductive and corrosion resistant and is selected from polyaniline or like electrically conductive and corrosion resistant organic metals to form a corrosion protective layer for the lead/lead alloy layer.

25. A battery as claimed in claim 18 wherein the battery further comprises a container a container for holding the negative plate and the positive plate and an electrolyte provided within the container.

26. A battery as claimed in claim 25 wherein the electrolyte is sulphuric acid.

27. A battery as claimed in claim 18 wherein the first metal layer has a thickness of not more than 10 micrometers, the lead/lead alloy layer has a thickness of not more than 100 micrometers, and the organic metal layer has a thickness of not more than 15 micrometers.

28. A battery as claimed in claim 18 wherein the anode comprises the substrate, first metal layer, lead/lead alloy layer and the organic metal layer.

29. A battery as claimed in claim 18 wherein the faradaic efficiency of the battery is 90%.

30. A battery as claimed in claim 18 wherein the battery experiences 38% increase in capacity at low discharge rate of C/20 and 50% of capacity at high discharge rate of 3C in relation to its capacity at C/5 rate.

31. A battery as claimed in claim 18 wherein the battery exhibits 25% increase in capacity at 50°C in relation to its capacity at 25°C and at temperatures below 25°C, decrease with 38% capacity in comparison to the capacity value observed at 25°C.

32. A battery as claimed in claim 18 wherein the battery accepts 90% of charge within 1.5 hours of charge during high rate charging.

33. A battery as claimed in claim 18 wherein the self-discharge of the battery is found to be 0.3%/Day.

34. A battery as claimed in claim 18 wherein the capacity loss is minimal during 100 cycles.

## Patentansprüche

1. Elektrochemisches Verfahren zum Herstellen einer korrosionsbeständigen Gitterstruktur für die Verwendung in einer Bleibatterie, wobei das Verfahren Folgendes umfasst:
(a) Beschichten eines Trägermaterials mit einer ersten Metallschicht und einer nachfolgenden Metallschicht aus Blei/Bleilegierung;
(b) galvanisches Abscheiden eines organischen Metalls auf der am Ende von Schritt
(a) erhaltenen Schicht unter Verwendung eines Elektrolyten zum Bilden einer Schutzschicht darauf und zum Erhalten der gewünschten Gitterstruktur.

2. Verfahren nach Anspruch 1, wobei es sich bei der ersten Metallschicht um eine Schicht aus Kupfer oder Nickel handelt.

3. Verfahren nach Anspruch 1, wobei es sich bei dem in Schritt (b) verwendeten Elektrolyten um Oxalsäure handelt.

4. Verfahren nach Anspruch 1, wobei das organische Metall Polyanilin und ähnliche elektrisch leitfähige und korrosionsbeständige organische Metalle umfasst.

5. Verfahren nach Anspruch 1, wobei es sich bei der Trägerschicht um Kunststoff handelt.

6. Verfahren nach Anspruch 5, wobei es sich bei dem Kunststoff um Acrylonitril-Butadien-Styrol handelt.

7. Verfahren nach Anspruch 1, wobei das elektrochemische Beschichtungsverfahren mehrere Male ausgeführt wird, um eine Schutzschicht von gewünschter Dicke zu erhalten.

8. Verfahren nach Anspruch 4, wobei die Polyanilinschicht durch potentiostatische Abscheidung von Polyanilin aus ungefähr 0,1 N Polyanilinlösung in Oxalsäure durch Platzieren des Gitters zwischen zwei Platinfolien-Hilfselektroden abgeschieden wird.

9. Korrosionsbeständige Gitterstruktur für die Verwendung in einer Bleibatterie, wobei die Gitterstruktur Folgendes umfasst:
(a) ein Trägermaterial, das mit einer ersten Metallschicht beschichtet ist,
(b) eine zweite Metallschicht einer Blei-/Bleilegierungsschicht, die auf der ersten Metallschicht abgeschieden ist, und
(c) eine organische Metallschicht, die auf der Blei-/Bleilegierungsschicht galvanisch abgeschieden ist.

10. Gitterstruktur nach Anspruch 9, wobei es sich bei dem Trägermaterial um einen Kunststoff handelt.

11. Gitterstruktur nach Anspruch 10, wobei es sich bei dem Kunststoff um Acrylonitril-Butadien-Styrol handelt.

12. Gitterstruktur nach Anspruch 9, wobei es sich bei der ersten Metallschicht um eine Schicht aus Kupfer oder Nickel handelt.

13. Gitterstruktur nach Anspruch 9, wobei das organische Metall aus Polyanilin oder ähnlichen elektrisch leitfähigen und korrosionsbeständigen organischen Metallen ausgewählt wird, die durch galvanisches Abscheiden unter Verwendung eines Oxalsäure umfassenden Elektrolyten auf der Blei-/Bleilegierungsschicht abgeschieden sind.

14. Gitterstruktur nach Anspruch 9, wobei die erste Metallschicht das Haftvermögen der Blei-/Bleilegierungsschicht unterstützt.

15. Gitterstruktur nach Anspruch 9, wobei der Träger eine Massendichte von weniger als 2,5 Gramm/cm³ und einen Schmelzpunkt von weniger als 300 °C hat.

16. Gitterstruktur nach Anspruch 9, wobei der Träger eine geringe Massendichte von weniger als ungefähr 1,5 g/cm³ und einen niedrigen Schmelzpunkt von weniger als ungefähr 175 °C hat.

17. Gitterstruktur nach Anspruch 9, wobei die erste Metallschicht eine Dicke von nicht mehr als 10 Mikrometer hat, die Blei-/Bleilegierungsschicht eine Dicke von nicht mehr als 100 Mikrometer hat und die Schutzschicht eine Dicke von nicht mehr als 15 Mikrometer hat.

18. Batterie, die Folgendes umfasst:
(a) eine positive Platte; und
(b) eine negative Platte, die eine Gitterstruktur enthält, wobei die Gitterstruktur Folgendes umfasst:
(i) einen Träger;
(ii) eine erste Metallschicht, die auf dem Träger abgeschieden ist;
(iii) eine zweite Metallschicht, umfassend eine Blei-/Bleilegierungsschicht, die auf der ersten Metallschicht abgeschieden ist, und
(iv) eine elektrisch leitfähige und korrosionsbeständige organische Metallschicht, die auf der Blei-/Bleilegierungsschicht abgeschieden ist.

19. Batterie nach Anspruch 18, wobei es sich bei dem Träger um einen Kunststoff handelt.

20. Batterie nach Anspruch 18, wobei das Trägermaterial eine niedrige Massendichte von weniger als ungefähr 1,5 g/cm³ und einen niedrigen Schmelzpunkt von weniger als ungefähr 175 °C hat.

21. Batterie nach Anspruch 19, wobei es sich bei dem Kunststoff um Acrylonitril-Butadien-Styrol mit einer Massendichte von weniger als 2,5 Gramm/cm³ und einem Schmelzpunkt von weniger als 300 °C handelt.

22. Batterie nach Anspruch 18, wobei es sich bei der ersten Metallschicht um eine Schicht aus Kupfer oder Nickel handelt.

23. Batterie nach Anspruch 18, wobei die erste Metallschicht das Haftvermögen der Blei-/Bleilegierungsschicht unterstützt.

24. Batterie nach Anspruch 18, wobei das organische Metall elektrisch leitfähig und korrosionsbeständig ist und aus Polyanilin oder ähnlichen elektrisch leitfähigen und korrosionsbeständigen organischen Metallen ausgewählt wird, um eine Korrosionsschutzschicht für die Blei-/Bleilegierungsschicht zu bilden.

25. Batterie nach Anspruch 18, wobei die Batterie weiter einen Behälter zum Aufnehmen der negativen Platte und der positiven Platte und einen in dem Behälter vorgesehen Elektrolyten umfasst.

26. Batterie nach Anspruch 25, wobei es sich bei dem Elektrolyten um Schwefelsäure handelt.

27. Batterie nach Anspruch 18, wobei die erste Metallschicht eine Dicke von nicht mehr als 10 Mikrometer hat, die Blei-/Bleilegierungsschicht eine Dicke von nicht mehr als 100 Mikrometer hat und die organische Metallschicht eine Dicke von nicht mehr als 15 Mikrometer hat.

28. Batterie nach Anspruch 18, wobei die Anode den Träger, die erste Metallschicht, die Blei-/Bleilegierungsschicht und die organische Metallschicht umfasst.

29. Batterie nach Anspruch 18, wobei der Faradaysche Wirkungsgrad der Batterie 90% beträgt.

30. Batterie nach Anspruch 18, wobei die Batterie bei der niedrigen Entladerate von C/20 eine Kapazitätszunahme von 38% und bei der hohen Entladerate von 3C 50% Kapazität gegenüber ihrer Kapazität bei der Rate von C/5 erfährt.

31. Batterie nach Anspruch 18, wobei die Batterie bei 50 °C eine Kapazitätszunahme von 25% gegenüber ihrer Kapazität bei 25°C aufweist und bei Temperaturen unter 25 °C eine Kapazitätsabnahme von 38% im Vergleich zum bei 25 °C beobachteten Kapazitätswert aufweist.

32. Batterie nach Anspruch 18, wobei die Batterie 90% der Ladung innerhalb von 1,5 Stunden des Ladens während des Ladens mit hoher Rate aufnimmt.

33. Batterie nach Anspruch 18, wobei die Selbstentladung der Batterie 0,3%/Tag beträgt.

34. Batterie nach Anspruch 18, wobei der Kapazitätsverlust während 100 Zyklen minimal ist.

## Revendications

1. Procédé électrochimique pour la fabrication d'une structure de grille résistante à la corrosion destinée à être utilisée dans un accumulateur au plomb-acide, le procédé comprenant :
(a) le revêtement d'une matière de substrat avec une première couche de métal et une couche de métal ultérieure de plombe/alliage de plomb ;
(b) l'électrodéposition d'un métal organique sur la couche obtenue à la fin de l'étape (a) en utilisant un électrolyte afin de former sur celle-ci une couche protectrice et obtenir la structure de grille souhaitée.

2. Procédé selon la revendication 1, dans lequel la première couche de métal est une couche de cuivre ou de nickel.

3. Procédé selon la revendication 1, dans lequel l'électrolyte utilisé à l'étape (b) est de l'acide oxalique.

4. Procédé selon la revendication 1, dans lequel le métal organique comprend de la polyaniline et des métaux organiques électriquement conducteurs et résistant à la corrosion semblables.

5. Procédé selon la revendication 1, dans lequel la couche de substrat est en plastique.

6. Procédé selon la revendication 5, dans lequel le plastique est de l'acrylonitrile butadiène styrène.

7. Procédé selon la revendication 1, dans lequel le processus de revêtement électrochimique est exécuté une pluralité de fois afin d'obtenir une couche protectrice de l'épaisseur souhaitée.

8. Procédé selon la revendication 4, dans lequel la couche de polyaniline est déposée par dépôt potentiostatique de polyaniline à partir d'une solution de polyaniline de 0,1 N dans de l'acide oxalique en plaçant la grille entre deux électrodes en feuille de platine auxiliaires.

9. Structure de grille résistante à la corrosion destinée à être utilisée dans un accumulateur au plomb-acide, la structure de grille comprenant :
(a) une matière de substrat revêtue d'une première couche de métal,
(b) une deuxième couche de métal de plomb/alliage de plomb déposée sur la première couche de métal, et
(c) une couche de métal organique électrodéposée sur la couche de plomb/alliage de plomb.

10. Structure de grille selon la revendication 9, dans laquelle la matière de substrat est un plastique.

11. Structure de grille selon la revendication 10, dans laquelle le plastique est de l'acrynonitrile butadiène styrène.

12. Structure de grille selon la revendication 9, dans laquelle la première couche de métal est une couche de cuivre ou de nickel.

13. Structure de grille selon la revendication 9, dans laquelle le métal organique est sélectionné parmi la polyaniline et des métaux organiques électriquement conducteurs et résistants à la corrosion semblables, déposé sur la couche de plomb/alliage de plomb par électrodéposition en utilisant un électrolyte comprenant de l'acide oxalique.

14. Structure de grille selon la revendication 9, dans laquelle la première couche de métal supporte l'adhérence de la couche de plomb/alliage de plomb.

15. Structure de grille selon la revendication 9, dans laquelle le substrat a une densité massique inférieure à 2,5 grammes/cm³ et un point de fusion inférieur à 300°C.

16. Structure de grille selon la revendication 9, dans laquelle le substrat a une densité massique basse inférieure à environ 1,5 g/cm³ et un point de fusion bas inférieur à environ 175°C.

17. Structure de grille selon la revendication 9, dans laquelle la première couche de métal a une épaisseur ne dépassant pas 10 micromètres, la couche de plomb/alliage de plomb a une épaisseur ne dépassant pas 100 micromètres, et la couche protectrice a une épaisseur ne dépassant pas 15 micromètres.

18. Accumulateur comprenant :
(a) une plaque positive ; et
(b) une plaque négative comprenant une structure de grille, la structure de grille comprenant :
(i) un substrat ;
(ii) une première couche de métal déposée sur le substrat ;
(iii) une deuxième couche de métal comprenant une couche de plomb/alliage de plomb déposée sur la première couche de métal ; et
(iv) une couche de métal organique électriquement conductrice et résistant à la corrosion déposée sur la couche de plomb/alliage de plomb.

19. Accumulateur selon la revendication 18, dans lequel le substrat est un plastique.

20. Accumulateur selon la revendication 18, dans lequel le substrat a une densité massique basse inférieure à environ 1,5 g/cm³ et un point de fusion bas inférieur à environ 175°C.

21. Accumulateur selon la revendication 19, dans lequel le plastique est de l'acrynonitrile butadiène styrène ayant une densité massique inférieure à 2,5 grammes/cm³ et un point de fusion inférieur à 300°C.

22. Accumulateur selon la revendication 18, dans lequel la première couche métallique est une couche de cuivre ou de nickel.

23. Accumulateur selon la revendication 18, dans lequel la première couche métallique supporte l'adhérence de la couche de plomb/alliage de plomb.

24. Accumulateur selon la revendication 18, dans lequel le métal organique est électriquement conducteur et résistant à la corrosion et est sélectionné parmi la polyaniline et des métaux organiques électriquement conducteurs et résistants à la corrosion semblables afin de former une couche protectrice contre la corrosion pour la couche de plomb/alliage de plomb.

25. Accumulateur selon la revendication 18, dans lequel l'accumulateur comprend en outre un récipient pour contenir la plaque négative et la plaque positive et un électrolyte fourni à l'intérieur du récipient.

26. Accumulateur selon la revendication 25, dans lequel l'électrolyte est de l'acide sulfurique.

27. Accumulateur selon la revendication 18, dans lequel la première couche de métal a une épaisseur ne dépassant pas 10 micromètres, la couche de plomb/alliage de plomb a une épaisseur ne dépassant pas 100 micromètres, et la couche de métal organique a une épaisseur ne dépassant pas 15 micromètres.

28. Accumulateur selon la revendication 18, dans lequel l'anode comprend le substrat, la première couche de métal, la couche de plomb/alliage de plomb et la couche de métal organique.

29. Accumulateur selon la revendication 18, dans lequel l'efficacité faradique de l'accumulateur est de 90%.

30. Accumulateur selon la revendication 18, dans lequel l'accumulateur subit 38% d'augmentation de sa capacité à un faible taux de décharge de C/20 et 50% de capacité à un taux de décharge élevé de 3C relativement à sa capacité à un taux de C/5.

31. Accumulateur selon la revendication 18, dans lequel l'accumulateur présente 25% d'augmentation de capacité à 50°C par rapport à sa capacité à 25°C et à des températures inférieures à 25°C, une diminution de 38% de capacité en comparaison à la valeur de capacité constatée à 25°C.

32. Accumulateur selon la revendication 18, dans lequel l'accumulateur accepte 90% de charge en 1,5 heures de charge durant une charge à taux élevé.

33. Accumulateur selon la revendication 18, dans lequel l'autodécharge de l'accumulateur est de 0,3%/jour.

34. Accumulateur selon la revendication 18, dans lequel la perte de capacité est minimale durant 100 cycles.
